(19) Europäisches Patentamt

European Patent Office

Office européen des brevets

(11) **EP 1 373 852 B1**

(12) **EUROPÄISCHE PATENTSCHRIFT**

(45) Veröffentlichungstag und Bekanntmachung des Hinweises auf die Patenterteilung:
**08.03.2006 Patentblatt 2006/10**

(51) Int Cl.:
*G01L 9/00* (2006.01)  *G01L 13/02* (2006.01)

(21) Anmeldenummer: **02766618.9**

(22) Anmeldetag: **04.04.2002**

(86) Internationale Anmeldenummer:
**PCT/EP2002/003720**

(87) Internationale Veröffentlichungsnummer:
**WO 2002/088655 (07.11.2002 Gazette 2002/45)**

(54) **KAPAZITIVER DIFFERENZ-DRUCKSENSOR**

CAPACITIVE DIFFERENTIAL PRESSURE SENSOR

CAPTEUR DE PRESSION DIFFERENTIELLE CAPACITIF

(84) Benannte Vertragsstaaten:
**AT BE CH CY DE DK ES FI FR GB GR IE IT LI LU MC NL PT SE TR**

(30) Priorität: **05.04.2001 DE 10117142**

(43) Veröffentlichungstag der Anmeldung:
**02.01.2004 Patentblatt 2004/01**

(73) Patentinhaber: **Endress + Hauser GmbH + Co. KG**
**79689 Maulburg (DE)**

(72) Erfinder:
• **HEGNER, Frank**
**79540 Lörrach (DE)**

• **DREWES, Ulfert**
**79379 Müllheim (DE)**
• **ROSSBERG, Andreas**
**79713 Bad Säckingen (DE)**
• **SCHMIDT, Elke**
**79650 Schopfheim (DE)**

(74) Vertreter: **Andres, Angelika Maria et al**
**Endress + Hauser (Deutschland) Holding GmbH, PatServe**
**Colmarer Strasse 6**
**79576 Weil am Rhein (DE)**

(56) Entgegenhaltungen:
**US-A- 5 050 035**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 373 852 B1

## Beschreibung

Die Erfindung betrifft einen kapazitiven Differenz-Drucksensor.

Derartige Differenz-Drucksensoren werden vielfach in der Prozeßautomation eingesetzt, um den Differenz-Druck von Prozeßmedien zu messen, die als Flüssigkeiten, Gase oder Dämpfe vorliegen können. Häufig bestehen derartige Differenz-Drucksensoren aus zwei keramischen Grundkörpern, die durch eine keramische Membran getrennt sind. An jedem Grundkörper ist eine flache Ausnehmung vorgesehen, die auch als Membranbett bezeichnet wird und die von der Membran vollständig überdeckt wird. Membranbett und Membran begrenzen jeweils eine Messkammer, die vom eigentlichen Prozeßmedium getrennt ist und die in der Regel mit einem Silikonöl als Druckübertragungsmedium gefüllt ist. Die Druckkammern sind gas- bzw. flüssigkeitsdicht. Dies erfordert einen erheblichen Aufwand bei der Herstellung der Verbindung Membran Grundkörper. An jedem Membranbett und an den beiden Seiten der Membran sind jeweils Elektroden vorgesehen, die meist in Sputtertechnik, Aufdampfverfahren oder z. B. im Siebdruckverfahren, wie in der US-A 50 50 035 beschrieben, aufgebracht werden. Diese vier Elektroden bilden paarweise jeweils zwei Meßkondensatoren, deren Meßsignal zur Bestimmung des Differenzdrucks ausgewertet wird.

Herrscht auf beiden Seiten der Membran ein unterschiedlicher Druck, so verformt sich die Membran elastisch. Dies führt zu einer Änderung des Abstandes der beiden Membranelektroden relativ zu den Membranbettelektroden und damit zu einer Kapazitätsänderung der beiden Meßkondensatoren. Die Kapazitätsänderung der Meßkondensatoren ist ein Maß für die an der Membran herrschende Druckdifferenz. Die Meßsignale werden mit Hilfe einer Auswerteelektronik, an die die vier Elektroden angeschlossen sind, erfaßt und ausgewertet.

Es hat sich gezeigt, daß bei gleicher Druckdifferenz aber unterschiedlichem Nenndruck ein Differenz-Drucksensor unterschiedliche Meßwerte ausgibt.

Aufgabe der Erfindung ist es, einen keramischen Differenz-Drucksensor zu schaffen, der einen Meßwert liefert, der vom Nenndruck unabhängig ist und der einfach und kostengünstig zu realisieren ist.

Gelöst wird diese Aufgabe durch einen Differenz-Drucksensor bestehend aus

einem ersten keramischen Grundkörper mit einem ersten Membranbett,

einem zweiten keramischen Grundkörper mit einem zweiten Membranbett,

einer Membran, die zwischen den beiden Grundkörpern angeordnet ist und die beiden einander gegenüberliegenden Membranbetten trennt,

einem ersten Meßkondensator K1 zur Erzeugung eines ersten Meßsignals S1 mit einem ersten Elektrodepaar, das jeweils am Membranbett bzw. an der Membran aufgebracht ist,

einem zweiten Meßkondensator K2 zur Erzeugung eines zweiten Meßsignals S2 mit einem zweiten Elektrodepaar, das jeweils am Membranbett bzw. an der Membran aufgebracht ist,

einer Elektronikschaltung

die aus den beiden Meßsignalen S1 und S2 die Kapazitäten CK1, CK2 der beiden Meßkondensatoren K1,K2 bestimmt,

die ein Signal SIG1 = 1/CK1 - 1/CK2 erzeugt, das im wesentlichen proportional zum Wert des Differenzdrucks DP ist und das vom Nenndruck NP abhängt,

die ein Signal SIG2 = 1/CK1 + 1/CK2 erzeugt, das proportional zum Wert des Nenndrucks NP ist,

wobei die Abhängigkeit des Meßwerts DP vom Nenndruck NP mit Hilfe des Signals SIG2 korrigiert wird.

In vorteilhafter Weise wird der Nenndruck NP über einen Polynomansatz bestimmt.

In vorteilhafter Weise besitzt der Polynomansatz die Form PN = C0 + C1 * SIG1 + C2 * SIG1$^2$ + C3 * SIG2. In vorteilhafter Weise wird anschließend der Differenzdruck DP über einen Polynomansatz bestimmt, der den oben ermittelten Nenndruck NP enthält.

In vorteilhafter Weise besitzt dieser Polynomansatz folgende Form:

$$DP = C4 + C5 * SIG1 + C6 * SIG1 * PN + C7 * PN.$$

Wesentliche Idee der Erfindung ist es, den Wert des Differenzdrucks DP mit Hilfe des Nenndrucks NP zu korrigieren, d.h. die Abhängigkeit des Meßwertes vom Nenndruck zu minimieren. Dabei werden Nenndruck NP und Differenzdruck DP mit demselben Sensor gemessen.

Nachfolgend ist die Erfindung anhand eines in der Zeichnung dargestellten Ausführungsbeispiels näher beschrieben. Es zeigen:

Fig. 1 Schnitt eines kapazitiven Drucksensors in schematischer Darstellung,

Fig. 2 Schnitt eines unter Nenndruckeinfluß verformten Differenz-Drucksensors gemäß Fig. 1

Fig. 3 Prinzip-Darstellung zur Erläuterung der Funktionsweise eines Differenz-Drucksensors

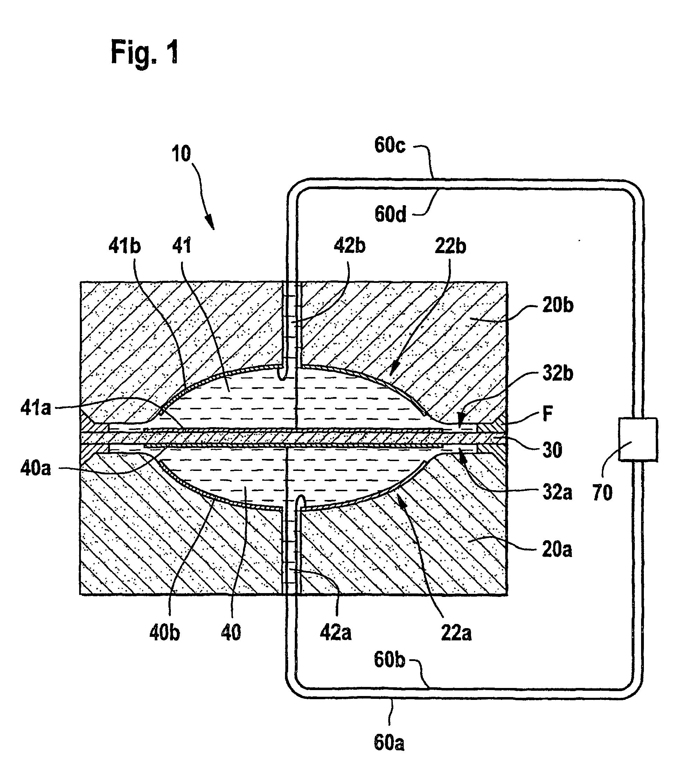

In Fig. 1 ist ein kapazitiver Differenzdrucksensor 10 im Schnitt schematisch dargestellt, der im wesentlichen aus zwei zylinderförmigen Grundkörpern 20a, 20b und einer kreisförmigen Membran 30 besteht. Die Membran 30 ist zwischen den beiden Grundkörpern 20a, 20 b angeordnet. Die Membran 30 überdeckt jeweils ein in den Grundkörpern 20a, 20b vorgesehenes Membranbett 22a, 22b. Die Verbindung zwischen Membran 30 und den Grundkörpern 20a, 20b erfolgt entlang einer Fügung F.

Grundkörper 20 und Membran 30 bestehen aus einem keramischen Material, z.B. Aluminiumoxid. Als gas- und flüssigkeitsdichte Fügung ist z.B. eine Aktivhartlotverbindung denkbar, die unter Vakuum bei ca. 900 °C hergestellt wird. Im verbundenen Zustand begrenzt die Membran 30 und der jeweilige Grundkörper 20a bzw. 20b jeweils eine Druckkammer 40, 41, die mit einer nahezu inkompressiblen Flüssigkeit z.B. einem Silikonöl gefüllt ist. In jeder Druckkammer 40, 41 herrscht bei Differenzdruck Null der Membran jeweils der gleiche Nenndruck. Jede der Druckkammern 40, 41 wird über einen eigenen Kanal 42a, 42b mit Druck beaufschlagt.

Auf jeder Seite 32a, 32b der Membran 30 ist jeweils eine Elektrode 40a , 41a aufgebracht. Die entsprechenden Gegenelektroden 40b, 41b, sind auf das jeweilige Membranbett 22a, 22b aufgebracht. Das Aufbringen kann z.B. durch Sputtern, Aufdampfen oder in Siebdrucktechnik erfolgen. Die Elektroden 40a, 41 a überdecken im wesentlichen das jeweilige Membranbett 22a, 22b. Sie müssen diese aber nicht notwendigerweise vollständig überdecken.

Die beiden Elektrodenpaare 40a, 40b bzw. 41a, 41b bilden jeweils einen Meßkondensator K1 bzw. K2, dessen Kapazität vom Abstand der jeweiligen Elektroden abhängt.

Der jeweilige Elektrodenabstand wird im wesentlichen durch den herrschenden Differenzdruck DP bestimmt.

Die Schichtdicken der Elektroden 40a bzw. 40b sind zur Verdeutlichung übertrieben stark dargestellt. Die Elektroden 40a, 40b sind über Anschlußleitungen 60 mit einer Elektronikschaltung 70 verbunden.

Die prinzipielle Elektronikschaltung für die Auswertung der Meßsignale S1 und S2 der Meßkondensatoren K1, K2 zur Bestimmung des Differenzdrucks DP ist Stand der Technik. Auf sie wird nicht näher eingegangen.

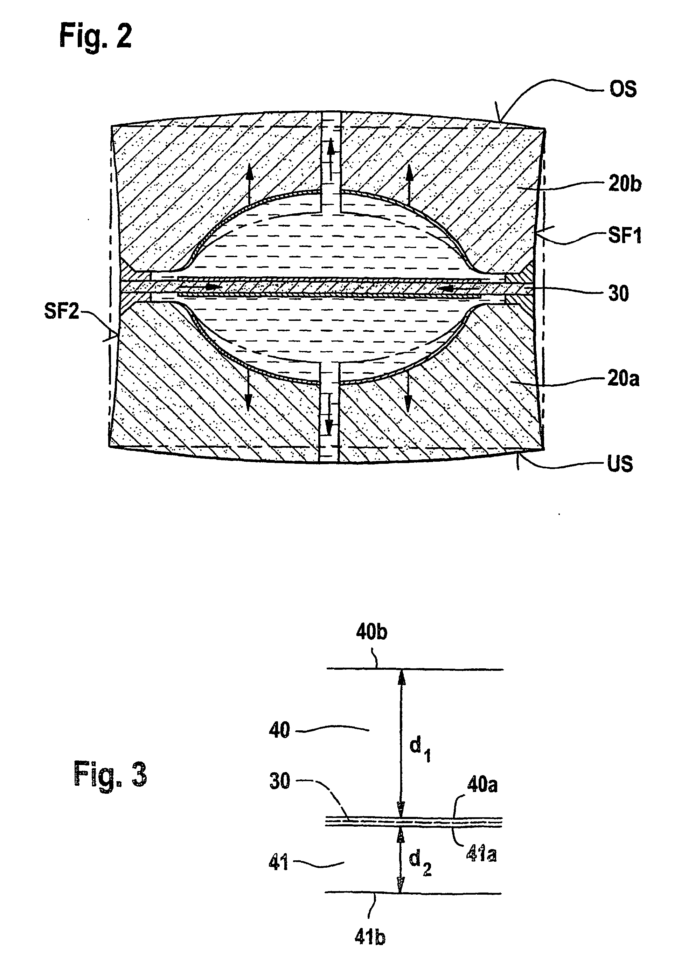

Fig. 2 zeigt einen Differenz-Drucksensor 10, der unter dem in den Druckkammern 40, 41 herrschenden Nenndruck NP verformt ist.

Die Verformungen sind zur Verdeutlichung übertrieben stark dargestellt. Gestrichelt dargestellt ist die äußere Konturlinie des Differenzdrucksensors 10 bei Nenndruck Null.

Durch den erhöhten Druck (Nenndruck NP) im Innern des Differenzdrucksensors 10 wölben sich die Membranbetten 22a, 22b nach oben bzw. nach unten. Dadurch schnürt sich der Differenzdrucksensor 10 im Bereich der Membran 30 an seinen Seitenflächen SF1, SF2 ein.

Durch die Einschnürung im Bereich der Membran 30 ändert sich auch die Steifigkeit der Membran 30 aufgrund der Änderung der Membraneinspannung. Der Nenndruck NP hat aber noch den zusätzlichen Einfluß auf die Steifigkeit des Membranmaterials 30: Herrscht auf beiden Seiten der Membran 30 ein relativ hoher Druck, so bewirkt ein Differenzdruck eine geringere Verschiebung der Membran 30 als bei einem geringerem Nenndruck NP. Beide Effekte sind gegenläufig.

Fig. 3 zeigt eine Prinzip-Darstellung der Funktionsweise eines Differenzducksensors gemäß Fig. 1.

Der Einfachheit halber wurde die speziellen Membranbettformen nicht gezeichnet, sondern durch einen konstanten Abstand der jeweiligen Elektrodenpaare 40a, 40b bzw. 41a, 41 b ersetzt.

Dem ersten Kondensator K1 entspricht der obere Teil der Darstellung. Dem zweiten Kondenstor K2 entspricht der untere Teil der Darstellung.

Der jeweilige Elektrodenabstand zwischen den Elektroden 40a, 40b bzw. 41 a, 41 b beträgt d1 bzw. d2.

Die Kapazitäten CK1 bzw. CK2 der Kondensatoren K1 bzw. K2 hängen von den entsprechenden Abständen d1 bzw. d2 ab.

In der Auswerteschaltung 70 werden aus diesen Kapazitäten die eigentlichen Sensorsignale gewonnen.

Aus der Differenz der beiden Kehrwerte der Kapazitäten CK1 und CK2 wird ein Signal SIG1 = 1/CK1- 1/CK2 gewonnen. Dieses Signal SIG1 ist proportional zur Differenz der beiden Abstände d1 und d2.

Das Signal SIG1 ist in erster Näherung proportional zum Differenzdruck DP. Es ist aber abhängig von den oben beschriebenen Steifigkeitsänderungen der Membran 30 unter dem Einfluß des Nenndrucks NP.

Aufgrund dieser Tatsache muß der Differenzdruck DP entsprechend dem herrschenden Nenndruck NP korrigiert werden. Dazu muß in einem ersten Schritt der Nenndruck NP bestimmt werden.

Der Nenndruck NP ist im wesentlichen proportional zur Summe der beiden Kehrwerte der Kapazitäten CK1, CK2 d.h. zum Signal Sig2=1/CK1 + 1/CK2

Das heißt der Nenndruck NP ist im wesentlichen proportional zur Summe der beiden Abstände d1 und d2 und unabhängig von der Auslenkung und der Steifigkeit der Membran.

In vorteilhafter Weise wird der Nenndruck NP über einen Polynomansatz bestimmt, bei dem auch das Signal SIG1, d.h. der Einfluß des Differenzdrucks berücksichtigt ist.

Der Polynomansatz hat z.B. die Form PN = C0 + C1 * SIG1 + C2 * SIG1$^2$ + C3 * SIG2

I n vorteilhafter Weise wird anschließend der Differenzdruck DP über einen Polynomansatz bestimmt, der den Nenndruck PN enthält.

Der Polynomansatz hat z. B. die Form:

$$DP = C4 + C5 * SIG1 + C6 * SIG1 * PN + C7 * PN$$

Die Größen C1- C7 sind in allen Gleichungen Konstanten.

Die Erfindung ist nicht auf keramische Drucksensoren beschränkt. Denkbar sind auch andere Materialien wie z.B. Silizium.

Weiterhin ist die Erfindung auch nicht auf Differenz-Drucksensoren mit Membranbett beschränkt.

Wesentliche Idee der Erfindung ist es, den Wert des Differenzdrucks DP mit Hilfe des Nenndrucks NP zu korrigieren, d.h. die Abhängigkeit des Meßwertes des Differenz-Drucksensors vom Nenndruck zu minimieren. Dabei werden Nenndruck NP und Differenzdruck DP mit demselben Sensor gemessen.

**Patentansprüche**

1. Differenz-Drucksensor bestehend aus
einem ersten Grundkörper (20a) mit einem ersten Membranbett (22a),
einem zweiten Grundkörper (20b) mit einem zweiten Membranbett (22b),
einer Membran (30), die zwischen den beiden Grundkörpern (20a,20b)
angeordnet ist und die einander gegenüberliegenden Membranbetten (22a, 22b) trennt,
einem ersten Meßkondensator K1 zur Erzeugung eines ersten Meßsignals S1 mit einem ersten Elektrodepaar (40a, 40b), das jeweils am Membranbett (22a) bzw. an der Membran (30) aufgebracht ist,
einem zweiten Meßkondensator K2 zur Erzeugung eines zweiten Meßsignals S2 mit einem zweiten Elektrodepaar (41a, 41 b), das jeweils am Membranbett (22b) bzw. an der Membran (30) aufgebracht ist,
einer Elektronikschaltung die aus den beiden Meßsignalen S1 und S2 die Kapazitäten CK1, CK2 der beiden Meßkondensatoren K1, K2 bestimmt,
die ein Signal SIG1 = 1/CK1 - 1/CK2 erzeugt, das im wesentlichen proportional zum Wert des Differenzdrucks DP ist und das vom Nenndruck NP abhängt, **dadurch gekennzeichnet daß** ein Signal SIG2 = 1/CK1 + 1/CK2 erzeugt wird, das proportional zum Wert des Nenndrucks NP ist,
wobei die Abhängigkeit des Meßwerts vom Nenndruck NP mit Hilfe des Signals SIG2 korrigiert wird.

2. Differenz-Drucksensor nach Anspruch 1, **dadurch gekennzeichnet,**
**daß** der Nenndruck NP über einen Polynomansatz bestimmt.

3. Differenz-Drucksensor nach Anspruch 2, **dadurch gekennzeichnet,**
**daß** der Polynomansatz die Form PN = C0 + C1 * SIG1 + C2 * SIG1$^2$ + C3 * SIG2 besitzt.

4. Differenz-Drucksensor nach Anspruch 3, **dadurch gekennzeichnet,**
**daß** der Differenzdruck DP über die Gleichung
DP = C4 + C5 * SIG1 + C6 * SIG1 * PN + C7 * PN bestimmt wird.

5. Differenz-Drucksensor nach einem der vorhergehenden Ansprüche, **dadurch gekennzeichnet, daß** er aus Keramik ist.

**Claims**

1. Differential pressure sensor comprising
a first ceramic body (20a) with a first membrane bed (22a),
a second ceramic body (20b) with a second membrane bed (22b),
a membrane (30), which is arranged between the two bodies (20a,20b) and separates the two oppositely situated membrane beds (22a, 22b) from one another,
a first measurement capacitor K1 for producing a first measurement signal S1 with a first electrode pair (40a, 40b), which is present as one electrode on the membrane bed (22a) and one electrode on the membrane (30),
a second measurement capacitor K2 for producing a second measurement signal S2 with a second electrode pair (41a, 41 b), which is present as one electrode on the membrane bed (22b) and one electrode on the membrane (30),
an electronic circuit
which determines from the two measurement signals S1 and S2 the capacitances CK1, CK2 of the two measurement capacitors K1, K2, which produces a signal SIG1 = 1/CK1 - 1/CK2, which is essentially proportional to the value of the pressure difference DP and which depends on the nominal pressure NP,
**characterized in, that** a signal SIG2 = 1/CK1 + 1/CK2 is generated, which is proportional to the value of the nominal pressure NP, wherein the dependence of the measurement value DP on the nominal pressure NP is corrected with the help of the signal SIG2.

2. Differential pressure sensor as claimed in claim 1, **characterized in that** the nominal pressure NP is determined from a polynomial expression.

3. Differential pressure sensor as claimed in claim 2, **characterized in that** the polynomial expression has the form

$$PN = C0 + C1*SIG1 + C2*SIG1^2 + C3*SIG2.$$

4. Differential pressure sensor as claimed in claim 3, **characterized in that** the pressure difference DP is determined from the equation DP = C4 + C5*SIG1 + C6*SIG1*PN + C7*PN.

5. Differential pressure sensor as claimed in one of the preceding claims, **characterized in that** it is of ceramic.

**Revendications**

1. Capteur de pression différentielle comprenant :

un premier corps de base (20a) avec un premier lit de membrane (22a),
un deuxième corps de base (20b) avec un deuxième lit de membrane (22b),
une membrane (30) qui est disposée entre les deux corps de base (20a, 20b) et qui sépare les lits de membrane (22a, 22b) situés l'un en face de l'autre,
un premier condensateur de mesure K1 pour la production d'un premier signal de mesure S1 avec une première paire d'électrodes (40a, 40b) qui est appliquée à chaque fois au lit de membrane (22a), respectivement, à la membrane (30),
un deuxième condensateur de mesure K2 pour la production d'un deuxième signal de mesure S2 avec une première paire d'électrodes (41 a, 41 b) qui est à chaque fois appliquée au lit de membrane (22b), respectivement à la membrane (30)
un circuit électronique qui détermine à partir des deux signaux de mesure S1 et S2 les capacités CK1, CK2 des deux condensateurs de mesure K1, K2, lesquels produisent un signal SIG1 = 1/CK1 - 1/CK2 qui est essentiellement proportionnel à la valeur de la pression différentielle DP et
qui dépend de la pression nominale NP, **caractérisé en ce qu'**un signal SIG2 = 1/CK1 + 1/CK2 est émis qui est proportionnel à la valeur de la pression nominale NP,
où la dépendance de la valeur de mesure de la pression nominale NP est corrigée à l'aide du signal SIG2.

2. Le capteur de pression différentielle selon la revendication 1, **caractérisé en ce que** la pression nominale NP est déterminée par l'intermédiaire d'une approche polynomiale.

3. Le capteur de pression différentielle selon la revendication 2, **caractérisé en ce que** l'approche polynomiale possède la forme PN = C0 + C1 * SIG1 + C2 * SIG1 2 + C3 * SIG2.

4. Le capteur de pression différentielle selon la revendication 3, **caractérisé en ce que** la pression différentielle DP est déterminé par l'intermédiaire de l'équation :

$$DP = C4 + C5 * SIG1 + C6 * SIG1 * PN + C7 * PN.$$

5. Le capteur de pression différentielle selon une des revendications précédentes, **caractérisé en ce qu'**il est en céramique.

# Fig. 1

## Fig. 2

OS

20b

SF1

30

SF2

20a

US

## Fig. 3

40b

40

$d_1$

30

40a

41a

41

$d_2$

41b